# EUROPÄISCHE PATENTSCHRIFT

(11) **EP 4 283 042 B1**
(45) Veröffentlichungstag und Bekanntmachung des Hinweises auf die Patenterteilung: **03.07.2024**
(21) Anmeldenummer: 23165006.0
(22) Anmeldetag: 29.03.2023
(51) Int. Cl.: E01C 19/23, E01C 19/28, F16N 9/02

(54) **BODENBEARBEITUNGSWALZE**
SOIL COMPACTING ROLLER
ROULEAU DE COMPACTAGE DE SOL

(30) Priorität: 25.05.2022 DE 102022113204
(43) Veröffentlichungstag der Anmeldung: 29.11.2023
(73) Patentinhaber: Hamm AG, 95643 Tirschenreuth (DE)
(72) Erfinder: Bäuml, Stefan, Tirschenreuth (DE); Rath, Günter, Krummennaab (DE)
(74) Vertreter: Ruttensperger Lachnit Trossin Gomoll

(56) Entgegenhaltungen:
- CN-U- 214 459 392
- JP-A- H06 299 511
- JP-A- 2018 150 675

## Beschreibung

Die vorliegende Erfindung betrifft eine Bodenbearbeitungswalze, umfassend einen in Richtung einer Walzendrehachse langgestreckten, in einem Bodenbearbeitungsbetrieb um die Walzendrehachse rotierenden Walzenmantel. In einem von dem Walzenmantel umgrenzten Walzeninnenraum ist eine erste Fluidkammer vorgesehen, wobei in Zuordnung zur ersten Fluidkammer in einem axialen Endbereich des Walzeninnenraums eine erste Öffnungsgruppe mit einer ersten Befüllöffnung, einer ersten Ablassöffnung und einer ersten Füllstandskontrollöffnung vorgesehen ist. In dem axialen Endbereich des Walzeninnenraums ist ein in einem Bodenbearbeitungsbetrieb nicht um die Walzendrehachse rotierendes Abschirmelement angeordnet, wobei in dem Abschirmelement eine erste Freigabeaussparung vorgesehen ist.

Eine derartige Bodenbearbeitungswalze ist aus der JP-H 06299511 A oder aus der JP-2018 150675 A bekannt. In einer im Walzeninnenraum vorgesehenen und von einem Fluidkammergehäuse umgrenzten Fluidkammer sind zwei um jeweilige Unwuchtdrehachsen zur Drehung antreibbare Unwuchtmassen sowie eine ein Drehmoment von einem Unwuchtantriebsmotor auf die Unwuchtmassen übertragende Getriebeanordnung vorgesehen. Zur Schmierung der Lager der Unwuchtmassen und der Getriebeanordnung ist die Fluidkammer teilweise mit einem Fluid, insbesondere Öl, gefüllt. Dieser Fluidkammer ist in einem axialen Endbereich des Walzeninnenraums eine Öffnungsgruppe zugeordnet, wobei die Öffnungsgruppe eine Befüllöffnung zum Einfüllen von Fluid in die Fluidkammer, eine Ablassöffnung zum Ablassen von Fluid aus der Fluidkammer und eine Füllstandskontrollöffnung zum Überwachen des Füllstands beim Einfüllen von Fluid über die Befüllöffnung umfasst. Die verschiedenen Öffnungen dieser Öffnungsgruppe sind in einem in einem Bodenbearbeitungsbetrieb um die Walzendrehachse rotierenden Gehäusebereich des Fluidkammergehäuses angeordnet.

In dem axialen Endbereich des Walzeninnenraums, in welchem die Öffnungsgruppe vorgesehen ist, ist ein in einem Bodenbearbeitungsbetrieb nicht um die Walzendrehachse rotierendes, somit grundsätzlich feststehendes Abschirmelement vorgesehen. Das Abschirmelement bildet ein plattenartiges Walzenträgerelement, über welches die Bodenbearbeitungswalze in diesem axialen Endbereich des Walzeninnenraums bzw. der Bodenbearbeitungswalze bezüglich eines Maschinenrahmens einer Bodenbearbeitungsmaschine getragen ist. In dem plattenartigen Walzenträgerelement bzw. Abschirmelement ist eine im Bodenbearbeitungsbetrieb durch ein Verschlusselement abgeschlossene Freigabeaussparung angeordnet.

Die verschiedenen Öffnungen der Öffnungsgruppe weisen zur Walzendrehachse den gleichen radialen Abstand auf, sind aber in verschiedenen Umfangspositionen mit Abstand zueinander angeordnet. Der radiale Abstand der Öffnungen der Öffnungsgruppe zur Walzendrehachse entspricht im Wesentlichen dem radialen Abstand der Freigabeaussparung zur Walzendrehachse, so dass durch entsprechende Drehpositionierung der Bodenbearbeitungswalze um die Walzendrehachse jede der Öffnungen der Öffnungsgruppe so positioniert werden kann, dass sie in Umfangsrichtung im Wesentlichen im Bereich der Freigabeaussparung positioniert ist. Somit besteht die Möglichkeit, bei von der Freigabeaussparung entferntem Abschlusselement durch Betrachtung im Wesentlichen in axialer Richtung jede der Öffnungen der Öffnungsgruppe dahingehend zu inspizieren, ob diese gegen den Austritt von Fluid dicht abgeschlossen ist oder ob eine Fluidleckage auftritt.

Es ist die Aufgabe der vorliegenden Erfindung, eine Bodenbearbeitungswalze vorzusehen, bei welcher bei verbesserter Schmierwirkung eine hohe Sicherheit gegen Fehlbedienung erreicht wird.

Erfindungsgemäß wird diese Aufgabe gelöst durch eine Bodenbearbeitungswalze, umfassend:
- einen in Richtung einer Walzendrehachse langgestreckten, in einem Bodenbearbeitungsbetrieb um die Walzendrehachse rotierenden Walzenmantel,
- eine erste Fluidkammer in einem von dem Walzenmantel umgrenzten Walzeninnenraum, wobei in Zuordnung zur ersten Fluidkammer in einem axialen Endbereich des Walzeninnenraums eine erste Öffnungsgruppe mit einer ersten Befüllöffnung, einer ersten Ablassöffnung und einer ersten Füllstandskontrollöffnung vorgesehen ist,
- ein in dem axialen Endbereich des Walzeninnenraums angeordnetes, in einem Bodenbearbeitungsbetrieb nicht um die Walzendrehachse rotierendes Abschirmelement, wobei in dem Abschirmelement eine erste Freigabeaussparung vorgesehen ist.

Die erfindungsgemäße Bodenbearbeitungswalze zeichnet sich durch eine von der ersten Fluidkammer gegen Fluidaustausch im Wesentlichen getrennte zweite Fluidkammer in dem von dem Walzenmantel umgrenzten Walzeninnenraum aus, wobei in Zuordnung zur zweiten Fluidkammer in dem axialen Endbereich des Walzeninnenraums eine zweite Öffnungsgruppe mit einer zweiten Befüllöffnung, einer zweiten Ablassöffnung und einer zweiten Füllstandskontrollöffnung vorgesehen ist. In einer ersten Drehpositionierung der Bodenbearbeitungswalze um die Walzendrehachse sind die erste Ablassöffnung und die erste Füllstandskontrollöffnung in Umfangsrichtung im Bereich der ersten Freigabeaussparung positioniert und sind die zweite Ablassöffnung und die zweite Füllstandskontrollöffnung von dem Abschirmelement überdeckt. In einer zweiten Drehpositionierung der Bodenbearbeitungswalze um die Walzendrehachse sind die zweite Ablassöffnung und die zweite Füllstandskontrollöffnung in Umfangsrichtung im Bereich der ersten Freigabeaussparung positioniert und sind die erste Ablassöffnung und die erste Füllstandskontrollöffnung von dem Abschirmelement überdeckt.

Durch das Bereitstellen zweier grundsätzlich voneinander getrennter Fluidkammern besteht die Möglichkeit, verschiedene im Walzeninnenraum angeordnete Funktionsgruppen, wie zum Beispiel zu lagernde Unwuchtmassen einerseits und eine zur Übertragung eines Antriebsdrehmoments auf diese vorgesehene Getriebeanordnung andererseits, voneinander unabhängig zu schmieren. Dies ermöglicht den Einsatz verschiedener Schmierstoffe bzw. Schmierstoffmengen in Anpassung an die zu schmierenden Funktionsgruppen. Das Positionieren der bei jeder Gruppe vorhandenen Ablassöffnung und Füllstandskontrollöffnung bezüglich einander derart, dass diese abhängig von der jeweiligen Drehpositionierung der Bodenbearbeitungswalze um die Walzendrehachse entweder paarweise in Umfangsrichtung im Bereich der ersten Freigabeaussparung positioniert sind und somit bei Betrachtung im Wesentlichen in Richtung der Walzendrehachse durch die erste Freigabeaussparung hindurch visuell erkennbar sind bzw. auch Zugriff auf diese zum Einbringen oder Entfernen eines jeweiligen Abschlusselements besteht, oder durch das Abschirmelement überdeckt sind, so dass ein jeweiliges Paar aus Ablassöffnung und Füllstandskontrollöffnung bei Betrachtung im Wesentlichen in Richtung der Walzendrehachse nicht zu sehen ist bzw. durch die erste Freigabeaussparung hindurch kein Zugriff auf diese besteht, ist ferner gewährleistet, dass in jeder Drehpositionierung der Bodenbearbeitungswalze von erster Drehpositionierung und zweiter Drehpositionierung eine Bedienperson nur in Wechselwirkung mit einem Öffnungspaar, das einer der Öffnungsgruppen zugeordnet ist, treten kann. Dies kann dazu beitragen, die Sicherheit gegen das Entleeren der falschen Fluidkammer bzw. das ungeeignete Befüllen der falschen Fluidkammer zu erhöhen.

Um durch Drehung der Bodenbearbeitungswalze um die Walzendrehachse die verschiedenen Paare aus Ablassöffnung und Füllstandskontrollöffnung in Ausrichtung mit der ersten Freigabeaussparung bringen zu können, wird vorgeschlagen, dass die erste Ablassöffnung und die erste Füllstandskontrollöffnung in einem im Bodenbearbeitungsbetrieb um die Walzendrehachse rotierenden Gehäusebereich eines die erste Fluidkammer begrenzenden ersten Fluidkammergehäuses vorgesehen sind, und dass die zweite Ablassöffnung und die zweite Füllstandskontrollöffnung in einem im Bodenbearbeitungsbetrieb um die Walzendrehachse rotierenden Gehäusebereich eines die zweite Fluidkammer begrenzenden zweiten Fluidkammergehäuses vorgesehen sind.

Die erste Befüllöffnung kann unabhängig von der Drehpositionierung der Bodenbearbeitungswalze im Bereich der ersten Freigabeaussparung positioniert sein, was beispielsweise dadurch erreicht werden kann, dass die erste Befüllöffnung in einem im Bodenbearbeitungsbetrieb nicht um die Walzendrehachse rotierenden, also einem grundsätzlich feststehenden Gehäusebereich des ersten Fluidkammergehäuses vorgesehen ist.

Für einen einfachen Zugriff insbesondere auch auf die erste Befüllöffnung kann die erste Freigabeaussparung einen zentralen Freigabeaussparungsbereich aufweisen, wobei die Walzendrehachse sich durch den zentralen Freigabeaussparungsbereich hindurch erstreckt und die erste Befüllöffnung in radialer Richtung und in Umfangsrichtung im Bereich des zentralen Freigabeaussparungsbereichs positioniert ist.

Für die Wechselwirkung mit den einander paarweise zugeordneten Ablassöffnungen und Füllstandskontrollöffnungen der beiden Öffnungsgruppen kann die Freigabeaussparung einen von dem zentralen Freigabeaussparungsbereich nach radial außen sich erstreckenden Freigabeaussparungsausbuchtungsbereich aufweisen, wobei die erste Ablassöffnung, die erste Füllstandskontrollöffnung, die zweite Ablassöffnung und die zweite Füllstandskontrollöffnung radial im Bereich des Freigabeaussparungsausbuchtungsbereichs positioniert sind. Dieser Freigabeaussparungsausbuchtungsbereich ist dabei vorzugsweise derart dimensioniert, dass er in Umfangsrichtung eine derart begrenzte Erstreckung aufweist, dass das abhängig von der jeweiligen Drehpositionierung der Bodenbearbeitungswalze mit diesem ausgerichtete Paar aus Ablassöffnung und Füllstandskontrollöffnung bei Betrachtung in axialer Richtung durch den Freigabeaussparungsausbuchtungsbereich hindurch im Wesentlichen vollständig sichtbar ist und auch die Möglichkeit besteht, auf ein jeweiliges Abschlusselement einzuwirken, dass andere Umfangsbereiche im gleichen radialen Bereich jedoch durch das Abschirmelement überdeckt sind.

Der zentrale Freigabeaussparungsbereich kann beispielsweise kreisscheibenförmig ausgebildet sein. Um ein vollständiges Entleeren der beiden Fluidkammern bei jeweils im Bereich des Freigabeaussparungsausbuchtungsbereichs positionierter Ablassöffnung zu gewährleisten, wird weiter vorgeschlagen, dass der Freigabeaussparungsausbuchtungsbereich vertikal im Wesentlichen unter der Walzendrehachse positioniert ist.

Das Abschirmelement kann beispielsweise ein plattenartiges Walzenträgerelement zur Festlegung der Bodenbearbeitungswalze an einem Maschinenrahmen einer Bodenbearbeitungsmaschine sein.

Für einen einfachen und stabilen Aufbau kann der im Bodenbearbeitungsbetrieb nicht um die Walzendrehachse rotierende Gehäusebereich des ersten Fluidkammergehäuses bezüglich des Abschirmelements festgelegt sein.

In der zweiten Fluidkammer kann wenigstens eine um eine Unwuchtdrehachse drehbare Unwuchtmasse mit zur Unwuchtdrehachse exzentrischem Massenschwerpunkt angeordnet sein. Um eine Antriebswechselwirkung zwischen einer derartigen Unwuchtmasse und einem Unwuchtantriebsmotor bereitstellen zu können, kann ferner in der ersten Fluidkammer wenigstens ein Teil einer Getriebeanordnung zur Übertragung eines Antriebsdrehmoments von einem Unwuchtantriebsmotor auf die wenigstens eine Unwuchtmasse angeordnet sein.

Auch der Unwuchtantriebsmotor kann bezüglich des Abschirmelements festgelegt sein.

Zur weiteren Erhöhung der Sicherheit gegen Fehlbedienung kann in dem Abschirmelement eine zweite Freigabeaussparung vorgesehen sein, wobei in der zweiten Drehpositionierung der Bodenbearbeitungswalze die zweite Befüllöffnung in Umfangsrichtung im Bereich der zweiten Freigabeaussparung positioniert ist.

Um durch die zweite Freigabeaussparung hindurch die zweite Fluidkammer zuverlässig mit Fluid füllen zu können, kann diese vertikal im Wesentlichen über der Walzendrehachse positioniert sein.

Auch die zweite Befüllöffnung kann in dem im Bodenbearbeitungsbetrieb um die Walzendrehachse rotierenden Gehäusebereich des zweiten Fluidkammergehäuses vorgesehen sein.

Um bei den Ablassöffnungen bzw. Füllstandskontrollöffnungen die diesen zugeordnete Funktion zuverlässig erfüllen zu können, wird weiter vorgeschlagen, dass die erste Ablassöffnung radial außerhalb der ersten Füllstandskontrollöffnung angeordnet ist, oder/und dass die erste Ablassöffnung und die erste Füllstandskontrollöffnung im Wesentlichen auf einer die Walzendrehachse schneidenden Radiallinie liegen. Weiter kann hierzu vorgesehen sein, dass die zweite Ablassöffnung radial außerhalb der zweiten Füllstandskontrollöffnung angeordnet ist, oder/und dass die zweite Ablassöffnung und die zweite Füllstandskontrollöffnung im Wesentlichen auf einer die Walzendrehachse schneidenden Radiallinie liegen.

Um auch das Einfüllen von Fluid in die erste Fluidkammer zu vereinfachen, kann die erste Befüllöffnung vertikal im Wesentlichen über der Walzendrehachse positioniert sein. Die zweite Befüllöffnung, die zweite Ablassöffnung und die zweite Füllstandskontrollöffnung können im Wesentlichen auf einer die Walzendrehachse schneidenden Radiallinien liegen, so dass dann, wenn die zweite Ablassöffnung und die zweite Füllstandskontrollöffnung im Wesentlichen vertikal unter der Walzendrehachse positioniert sind, die zweite Befüllöffnung im Wesentlichen vertikal über der Walzendrehachse positioniert ist.

Zum leichten Erkennen der korrekten Positionierung der Ablassöffnung und der Füllstandskontrollöffnung einer Öffnungsgruppe im Bereich der ersten Freigabeaussparung kann in Zuordnung zu wenigstens einer Öffnungsgruppe an der Bodenbearbeitungswalze eine die Positionierung der Ablassöffnung und der Füllstandskontrollöffnung dieser Öffnungsgruppe im Bereich der ersten Freigabeaussparung indizierende Positionierungsreferenz vorgesehen sein. Ist die Positionierungsreferenz in einer für diese vorgegebenen definierten Positionierung, ist dies ein Anzeichen dafür, dass die mit dieser zusammenwirkende Öffnungsgruppe bzw. deren jeweilige Ablassöffnung und Füllstandskontrollöffnung im Bereich der ersten Freigabeaussparung positioniert sind.

Die Erfindung betrifft ferner eine Bodenbearbeitungsmaschine, umfassend wenigstens eine Bodenbearbeitungswalze mit erfindungsgemäßem Aufbau.

Die vorliegende Erfindung wird nachfolgend mit Bezug auf die beiliegenden Figuren detailliert beschrieben. Es zeigt:
- Fig. 1: eine Seitenansicht eines mit einer als Verdichterwalze ausgebildeten Bodenbearbeitungswalze ausgebildeten Bodenverdichters;
- Fig. 2: eine Axialansicht einer bei dem Bodenverdichter der Fig. 1 einsetzbaren Bodenbearbeitungswalze in Blickrichtung A in Fig. 3;
- Fig. 3: eine Längsschnittansicht der Bodenbearbeitungswalze der Fig. 2, geschnitten längs einer Linie III-III in Fig. 2;
- Fig. 4: eine Längsschnittansicht der Bodenbearbeitungswalze der Fig. 2, geschnitten längs einer Linie IV-IV in Fig. 2.

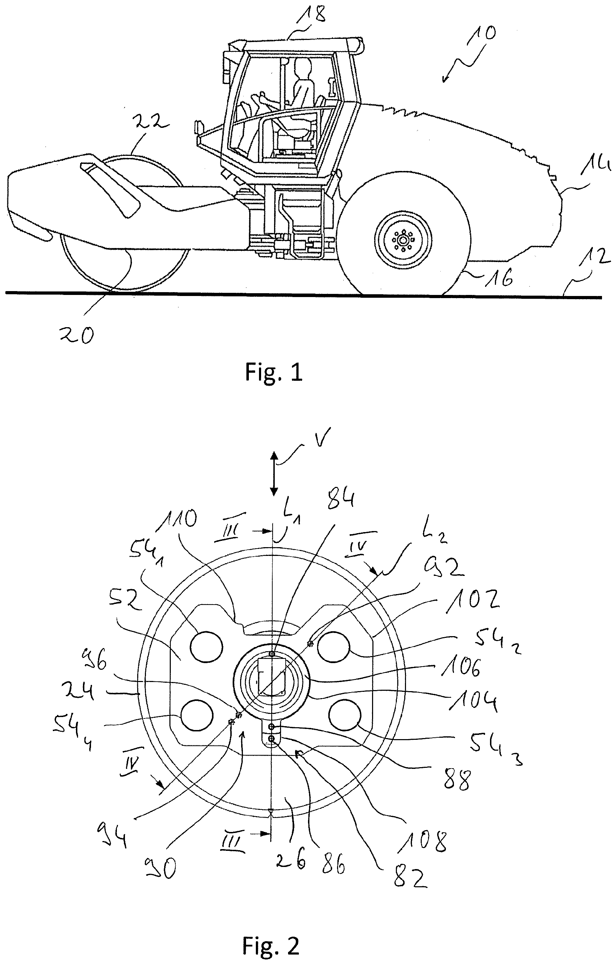

In Fig. 1 ist eine als Bodenverdichter ausgebildete Bodenbearbeitungsmaschine 10 in Seitenansicht auf einem zu verdichtenden Boden 12 dargestellt. Die Bodenbearbeitungsmaschine 10 umfasst einen Hinterwagen 14, an welchem ein Antriebsaggregat und durch dieses zum Bewegen der Bodenbearbeitungsmaschine 10 auf dem Boden 12 anzutreibende Antriebsräder 16 vorgesehen sind. Ferner ist am Hinterwagen 14 ein Bedienstand 18 für eine die Bodenbearbeitungsmaschine 10 bedienende Bedienperson vorgesehen.

Ein Vorderwagen 20 ist im Bereich eines Knickgelenks 22 mit dem Hinterwagen 14 gelenkig verbunden, so dass durch Verschwenken des Vorderwagens 20 bezüglich des Hinterwagens 14 um eine näherungsweise vertikal orientierte Lenkachse die Bodenbearbeitungsmaschine 10 gelenkt werden kann. Am Vorderwagen 20 ist eine im dargestellten Ausgestaltungsbeispiel als Verdichterwalze ausgebildete Bodenbearbeitungswalze 22 derart getragen, dass sie um eine zur Zeichenebene der Fig. 1 orthogonal stehende Walzendrehachse drehbar ist. Die Bodenbearbeitungswalze 22 kann dabei grundsätzlich frei drehbar am Vorderwagen 20 getragen sein, kann jedoch auch zum Bewegen des Bodenverdichters 10 auf dem Boden 12 zur Drehung um die Walzendrehachse angetrieben sein.

Nachfolgend wird mit Bezug auf die Fig. 2 bis 4 ein Ausgestaltungsbeispiel einer derartigen Bodenbearbeitungswalze 22 erläutert. Es ist darauf hinzuweisen, dass der Bodenverdichter 10 auch am Hinterwagen 14 eine derartige Bodenbearbeitungswalze aufweisen könnte bzw. grundsätzlich zwei Bodenbearbeitungswalzen aufweisen könnte, von welchen zumindest eine den nachfolgend mit Bezug auf die Fig. 2 bis 4 beschriebenen Aufbau aufweist.

Die in den Fig. 2 bis 4 dargestellte Bodenbearbeitungswalze 22 umfasst einen in Richtung der Walzendrehachse D langgestreckte und diese umgebenden Walzenmantel 24. In dem von dem Walzenmantel 24 umgebenen Walzeninnenraum 26 ist eine allgemein mit 28 bezeichnete Unwuchtanordnung vorgesehen. Diese umfasst im dargestellten Ausgestaltungsbeispiel zwei um jeweilige Unwuchtdrehachsen U₁, U₂ drehbare Unwuchtmassen 30, 32 jeweils mit einem zur jeweiligen Unwuchtdrehachse U₁ bzw. U₂ exzentrischem Massenschwerpunkt M₁, M₂. Durch Rotation der Unwuchtmassen 30, 32 um die diesen jeweils zugeordneten Unwuchtdrehachsen U₁, U₂ und geeignete Einstellung der Phasenlage der Unwuchtmassen 30, 32 bzw. der Massenschwerpunkte M₁, M₂ kann im Bodenbearbeitungsbetrieb eine periodische Einwirkung auf die Bodenbearbeitungswalze 22 bzw. den durch diese zu bearbeitenden, insbesondere zu verdichtenden Boden 12 erreicht werden. Je nach Phasenlage der Massenschwerpunkte M₁, M₂ kann diese Einwirkung durch eine zur Walzendrehachse D im Wesentlichen orthogonal orientierte Kraft bereitgestellt sein, so dass die Unwuchtanordnung 28 bzw. die Bodenbearbeitungswalze 22 in einem Vibrationsbetrieb arbeitet. In einem Oszillationsbetrieb der Unwuchtanordnung 28 erzeugen die rotierenden Unwuchtmassen 30, 32 ein die Bodenbearbeitungswalze 22 bzw. den Walzenmantel 24 periodisch in Umfangsrichtung hin und her beschleunigendes Drehmoment.

Um die beiden Unwuchtmassen 30, 32 zur Drehung anzutreiben, ist ein beispielsweise als Hydraulikmotor ausgebildeter Unwuchtantriebsmotor 34 vorgesehen. Dieser treibt über eine Abtriebswelle 36 und eine im dargestellten Ausgestaltungsbeispiel Zahnradzüge umfassende Getriebeanordnung 38 die Unwuchtmassen 30, 32 zur Drehung an. Es ist darauf hinzuweisen, dass die Getriebeanordnung 38 anstelle der Zahnradzüge auch einen Riemenantrieb oder Kettentrieb umfassen könnte, bei welchem jede der Unwuchtmassen 30, 32 mit der Abtriebswelle 36 des Unwuchtantriebsmotors 34 über einen Riemen, beispielsweise Zahnriemen, bzw. eine Kette zur gemeinsamen Drehung gekoppelt ist.

In Zuordnung zu der Getriebeanordnung 38 einerseits und der Unwuchtanordnung 28 andererseits sind an der Bodenbearbeitungswalze 22 bzw. im Walzeninnenraum 26 eine erste Fluidkammer 40 und eine zweite Fluidkammer 42 ausgebildet. Dabei ist die erste Fluidkammer 40 in einem allgemein mit 44 bezeichneten ersten Fluidkammergehäuse 44 vorgesehen, während die zweite Fluidkammer 42 in einem allgemein mit 46 bezeichneten zweiten Fluidkammergehäuse ausgebildet ist.

Das erste Fluidkammergehäuse 44 umfasst ein Gehäuseteil 48, welches im Wesentlichen einen nicht rotierenden Gehäusebereich 50 des ersten Fluidkammergehäuses 44 bereitstellt. Das Gehäuseteil 48 ist beispielsweise direkt an einem plattenartigen Trägerelement 52 festgelegt, welches über beispielsweise vier elastische, beispielsweise mit Gummimaterial aufgebaute Aufhängungselemente 54₁, 54₂, 54₃, 54₄ an einem Maschinenrahmen, im dargestellten Beispiel dem Vorderwagen 20 des Bodenverdichters 10, im Wesentlichen feststehend getragen ist. Auch der Unwuchtantriebsmotor 34 kann beispielsweise direkt an dem plattenartigen Trägerelement 52 festgelegt und somit über dieses am Vorderwagen 20 im Wesentlichen feststehend, also um die Walzendrehachse D nicht drehbar getragen sein.

Das erste Fluidkammergehäuse 44 umfasst ferner Gehäuseteile 56, 58, welche miteinander fest verbunden sind oder auch einstückig, also monolithisch ausgebildet sein können und an dem Gehäuseteil 48 über eine im Wesentlichen fluiddichte Lageranordnung 60 um die Walzendrehachse D drehbar gelagert sind.

Die Gehäuseteile 48, 56, 58 umkapseln beispielsweise in Verbindung mit dem Trägerelement 52 die erste Fluidkammer 40 im Wesentlichen vollständig, wobei an dem Gehäuseteil 58 die Unwuchtmassen 30, 32 in einem ihrer axialen Endbereiche über Lagerungen 62, 64 drehbar gelagert sind. Die am Gehäuseteil 58 abgestützten Lagerungen 62, 64 stellen im Wesentlichen auch eine Fluidtrennung zwischen der ersten Fluidkammer 40 und der zweiten Fluidkammer 42 bereit.

Das die Lagerungen 62, 64 stützende Gehäuseteil 58 bildet auch einen Bestandteil des zweiten Fluidkammergehäuses 46. Dieses zweite Fluidkammergehäuse 46 umfasst ferner eine die Walzendrehachse D beispielsweise im Wesentlichen zylindrisch umgebende Umfangswand 66, die in ihren beiden axialen Endbereichen an auch den Walzenmantel 24 tragenden Trägerscheiben 68, 70 getragen ist. Das Gehäuseteil 58 ist an der Trägerscheibe 68 getragen und begrenzt somit die zweite Fluidkammer 42 zu einem ersten axialen Endbereich 72 des Walzeninnenraums 26 hin. Ein an der Trägerscheibe 70 festgelegtes Gehäuseteil 74 begrenzt zusammen mit der Trägerscheibe 70 die zweite Fluidkammer 42 in Richtung zu einem zweiten axialen Endbereich 76 des Walzeninnenraums 26 bzw. der Bodenbearbeitungswalze 22. An dem Gehäuseteil 74 sind die beiden Unwuchtmassen 30, 32 in ihren anderen axialen Endbereichen über jeweilige Lagerungen 78, 80 drehbar gelagert.

Zum Befüllen und Entleeren der ersten Fluidkammer 44 ist eine erste Öffnungsgruppe 82 vorgesehen. Die erste Öffnungsgruppe 82 umfasst in dem Gehäuseteil 48, also dem nicht rotierenden Gehäusebereich 50 des ersten Fluidkammergehäuses 44, eine erste Befüllöffnung 84, und umfasst ferner eine erste Ablassöffnung 86 und eine erste Füllstandskontrollöffnung 88, wobei im dargestellten Ausgestaltungsbeispiel die erste Ablassöffnung 86 im Gehäuseteil 58 ausgebildet ist und die erste Füllstandskontrollöffnung 88 im Gehäuseteil 56 ausgebildet ist. Dies bedeutet, dass die erste Ablassöffnung 86 und die erste Füllstandskontrollöffnung 88 in einem im Bodenbearbeitungsbetrieb um die Walzendrehachse D rotierenden Gehäusebereich 89 des ersten Fluidkammergehäuses 44 angeordnet sind.

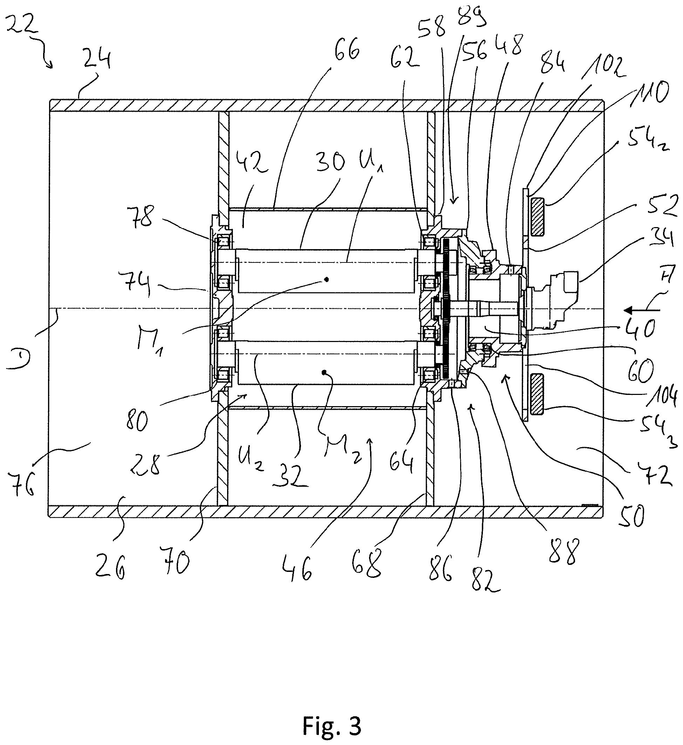

In den Fig. 2 und 3 ist zu erkennen, dass die erste Befüllöffnung 84 am nicht rotierenden Gehäusebereich 50 des ersten Fluidkammergehäuses 44 in einer Vertikalrichtung V im Wesentlichen direkt über der Walzendrehachse D angeordnet ist. Die erste Ablassöffnung 86 und die erste Füllstandskontrollöffnung 88 liegen auf einer die Walzendrehachse D schneidenden, zu dieser also orthogonal stehenden Radiallinie L₁, wobei die erste Ablassöffnung 86 einen größeren Radialabstand zur Walzendrehachse D aufweist, als die erste Füllstandskontrollöffnung 88. Bei Positionierung der Bodenbearbeitungswalze 22 in einer in den Fig. 2 und 3 veranschaulichten ersten Drehpositionierung der Bodenbearbeitungswalze 22 um die Walzendrehachse D liegt auch die erste Befüllöffnung 84 auf dieser Radiallinie L₁ und liegen die erste Ablassöffnung 86 und die erste Füllstandskontrollöffnung 88 vertikal im Wesentlichen direkt unter der Walzendrehachse D.

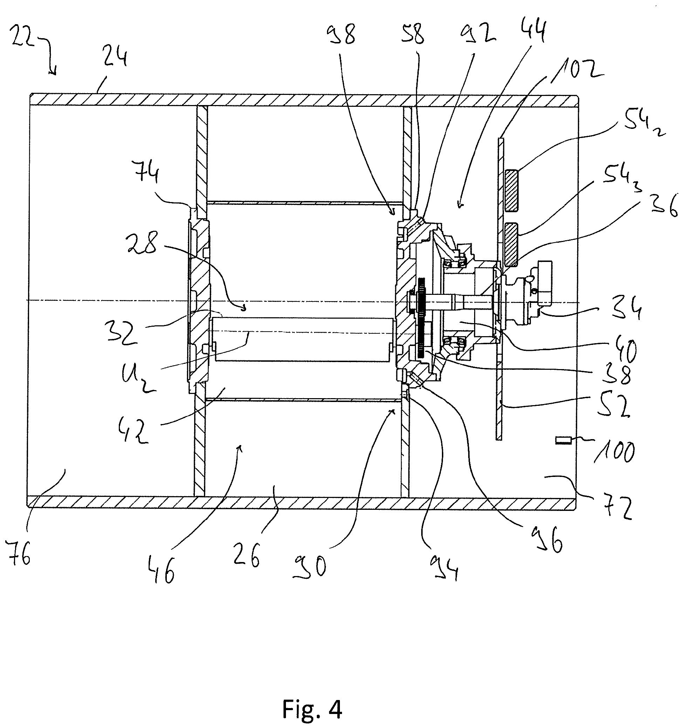

In Zuordnung zur zweiten Fluidkammer 42 ist an dem selben axialen Endbereich des Walzeninnenraums 26 wie die erste Öffnungsgruppe 82, also am ersten axialen Endbereich 72, eine in Fig. 4 erkennbare zweite Öffnungsgruppe 90 vorgesehen. Die zweite Öffnungsgruppe 90 umfasst am Gehäuseteil 58 eine zweite Befüllöffnung 92, eine zweite Ablassöffnung 94 und eine zweite Füllstandskontrollöffnung 96. Da das gesamte zweite Fluidkammergehäuse 46 im Bodenbearbeitungsbetrieb um die Walzendrehachse D rotiert, sind die in dem Gehäuseteil 58 vorgesehene zweite Befüllöffnung 92, zweite Ablassöffnung 94 und zweite Füllstandskontrollöffnung 96 in einem im Bodenbearbeitungsbetrieb um die Walzendrehachse D rotierenden Gehäusebereich 98 des zweiten Fluidkammergehäuses 46 angeordnet.

Wie dies in den Fig. 2 und 4 erkennbar ist, liegen die zweite Befüllöffnung 92, die zweite Ablassöffnung 94 und die zweite Füllstandskontrollöffnung 96 auf einer die Walzendrehachse D schneidenden, zu dieser also orthogonal stehenden Radiallinie L₂, wobei die zweite Befüllöffnung 92 einerseits und die zweite Ablassöffnung 94 sowie die zweite Füllstandskontrollöffnung 96 andererseits an bezüglich der Walzendrehachse D einander diametral gegenüberliegenden Seiten liegen.

In einer in der Fig. 4 dargestellten zweiten Drehpositionierung der Bodenbearbeitungswalze 22 ist die Radiallinie L₂ entlang der Vertikalrichtung V orientiert, so dass die zweite Befüllöffnung 92 vertikal im Wesentlichen direkt über der Walzendrehachse D liegt und die zweite Ablassöffnung 94 sowie die zweite Füllstandskontrollöffnung 96 vertikal im Wesentlichen direkt unter der Walzendrehachse D liegen. Auch bei dieser zweiten Öffnungsgruppe 90 ist der Radialabstand der zweiten Ablassöffnung 94 zur Walzendrehachse D größer als der Radialabstand der zweiten Füllstandskontrollöffnung 96 zur Walzendrehachse D, insbesondere in demjenigen Bereich, in welchem diese zur zweiten Fluidkammer 42 offen ist.

Es ist darauf hinzuweisen, dass selbstverständlich in Zuordnung zu jeder Befüllöffnung 84, 92, jeder Ablassöffnung 86, 94 und jeder Füllstandskontrollöffnung 88, 96 jeweils ein beispielsweise als Verschlussschraube ausgebildetes Abschlusselement vorgesehen ist, welches insbesondere im Bodenbearbeitungsbetrieb die jeweils zugeordnete Öffnung fluiddicht abschließt, zum Entleeren bzw. zum Nachfüllen von Fluid jedoch entfernt werden kann. Zum Entleeren von Fluid wird das einer jeweiligen Ablassöffnung 86, 96 zugeordnete Abschlusselement entfernt, um Fluid aus der jeweiligen Fluidkammer 40 bzw. 42 abzulassen. Beim Nachfüllen von Fluid in die Fluidkammern 40, 42 wird bei abgeschlossener Ablassöffnung 86, 94 und geöffneter Befüllöffnung 84, 92 sowie geöffneter Füllstandskontrollöffnung 88, 96 Fluid, also beispielsweise Öl, über die Befüllöffnung 84, 92 in die jeweilige Fluidkammer 40 bzw. 42 eingeleitet, bis aus der jeweiligen Füllstandskontrollöffnung 88, 96 Fluid austritt. Ist dies der Fall, werden auch die jeweilige Befüllöffnung 84, 92 und Füllstandskontrollöffnung 88, 96 durch das zugeordnete Abschlusselement wieder fluiddicht abgeschlossen.

Um dabei das vollständige Entleeren der Fluidkammern 40, 42 zu gewährleisten bzw. das Einstellen eines geeigneten Füllstands des Fluids in der jeweiligen Fluidkammer 40, 42 zu erreichen, wird die erste Fluidkammer 40 in der in Fig. 2 und 3 veranschaulichten ersten Drehpositionierung der Bodenbearbeitungswalze 22 befüllt bzw. entleert. Wie bereits ausgeführt, liegen in der ersten Drehpositionierung der Bodenbearbeitungswalze 22 die erste Ablassöffnung 86 und die erste Füllstandskontrollöffnung 88 vertikal im Wesentlichen direkt unter der Walzendrehachse D bzw. auch übereinander. Zum Befüllen bzw. Entleeren der zweiten Fluidkammer 42 wird die Bodenbearbeitungswalze 22 in der in Fig. 4 veranschaulichten zweiten Drehpositionierung angeordnet, in welcher die zweite Befüllöffnung 92 vertikal im Wesentlichen direkt über der Walzendrehachse D liegt und die zweite Ablassöffnung 94 und die zweite Füllstandskontrollöffnung 96 vertikal im Wesentlichen direkt unter der Walzendrehachse D und übereinander liegen.

Um das Vorhandensein einer jeweiligen Drehpositionierung in einfacher Weise erkenntlich zu machen, kann in Zuordnung zu jeder der Öffnungsgruppen 82, 90 eine Positionierungsreferenz 100 vorgesehen sein. Im dargestellten Ausgestaltungsbeispiel ist die Positionierungsreferenz 100 der ersten Öffnungsgruppe 82 zugeordnet und ist beispielsweise im ersten axialen Endbereich 72 des Walzeninnenraums 26 an der Innenseite des Walzenmantels 24 so angebracht, dass bei vorhandener erster Drehpositionierung und damit im Wesentlichen vertikal unter der Walzendrehachse liegender erster Ablassöffnung 86 und erster Füllstandskontrollöffnung 88 die Positionierung der Referenz 100 unmittelbar dem Boden 12 gegenüberliegt und somit auch vertikal im Wesentlichen direkt unter der Walzendrehachse D liegt. Gleichermaßen kann auch der zweiten Öffnungsgruppe 90 eine derartige Positionierungsreferenz zur Positionierungsreferenz 100 der ersten Öffnungsgruppe 82 in Umfangsrichtung versetzt angeordnet sein.

Bei der in den Fig. 2 bis 4 dargestellten Bodenbearbeitungswalze 22 bildet das plattenartige Trägerelement 52 ein allgemein mit 102 bezeichnetes Abschirmelement. Durch das Abschirmelement 102 sind im ersten axialen Endbereich 72 des Walzeninnenraums 26 grundsätzlich die beiden Öffnungsgruppen 82, 90 gegen visuelle Wahrnehmung bei Betrachtung der Bodenbearbeitungswalze 82 in einer in Fig. 3 dargestellten Axialrichtung A und im Wesentlichen auch gegen einen Zugriff abgeschirmt.

In dem Trägerelement 52 bzw. Abschirmelement 102 ist eine allgemein mit 104 bezeichnete erste Freigabeaussparung vorgesehen. Die erste Freigabeaussparung 104 umfasst einen zur Walzendrehachse D beispielsweise im Wesentlichen konzentrischen, kreisscheibenförmigen zentralen Freigabeaussparungsbereich 106 und einen vom zentralen Freigabeaussparungsbereich 106 in der vertikalen Richtung V unten sich radial weg erstreckenden Freigabeaussparungsausbuchtungsbereich 108. Insbesondere in Fig. 2 ist zu erkennen, dass die erste Befüllöffnung 84 am Gehäuseteil 48 so positioniert ist, dass sie radial innerhalb des zentralen Freigabeaussparungsbereichs 106 liegt, so dass die erste Befüllöffnung 84 bei Betrachtung in der Axialrichtung A visuell erkennbar ist und das dieser zugeordnete Abschlusselement durch den zentralen Freigabeaussparungsbereichs 106 manipuliert, also entfernt und auch wieder angebracht werden kann.

Der Freigabeaussparungsausbuchtungsbereich ist so positioniert und dimensioniert, dass bei in der ersten Drehpositionierung positionierter Bodenbearbeitungswalze die erste Ablassöffnung 86 und die erste Füllstandskontrollöffnung 88 in Umfangsrichtung im Bereich des Freigabeaussparungsausbuchtungsbreichs 108 liegen, wobei dieser radial so weit nach unten ausgedehnt ist, dass die erste Ablassöffnung 86 und die erste Füllstandskontrollöffnung 88 auch in radialer Richtung durch das Abschirmelement 102 nicht überdeckt sind. In der ersten Drehpositionierung der Bodenbearbeitungswalze 22 sind daher auch die erste Ablassöffnung 86 und die erste Füllstandskontrollöffnung 88 durch die erste Freigabeaussparung 104 hindurch visuell erkennbar und die diesen zugeordneten Abschlusselemente können durch die erste Freigabeaussparung 104, insbesondere den Freigabeaussparungsausbuchtungsbereich 108 derselben hindurch manipuliert, also entfernt und wieder angebracht werden.

Die Fig. 2 gibt zu erkennen, dass in der ersten Drehpositionierung der Bodenbearbeitungswalze 22 alle Öffnungen der zweiten Öffnungsgruppe 90 von dem Abschirmelement 102 überdeckt sind. Das heißt, dass die zweite Ablassöffnung 94 und die zweite Füllstandskontrollöffnung 96 in Umfangsrichtung nicht im Bereich der ersten Freigabeaussparung 104, insbesondere des Freigabeaussparungsausbuchtungsbereichs 108 derselben, liegen, was jedoch dann der Fall ist, wenn die Bodenbearbeitungswalze in der zweiten Drehpositionierung ist, in welcher die Radiallinie L₂ im Wesentlichen vertikal orientiert ist.

Auch die zweite Befüllöffnung 92 ist in der ersten Drehpositionierung der Bodenbearbeitungswalze 22 in axialer Richtung durch das Abschirmelement 102 überdeckt, was primär auch daran liegt, dass die zweite Befüllöffnung 92 einen größeren Radialabstand zur Walzendrehachse D aufweist, als die erste Befüllöffnung 84. Das heißt, auch durch den zentralen Freigabeaussparungsbereich 106 hindurch kann bei Betrachtung in axialer Richtung die zweite Befüllöffnung 92 nicht visuell wahrgenommen werden.

In einem in der Vertikalrichtung V oberen Bereich des Abschirmelements 102 ist eine vertikal nach oben offene zweite Freigabeaussparung 110 ausgebildet. Diese ist so positioniert und dimensioniert, dass in der zweiten Drehpositionierung der Bodenbearbeitungswalze 22, also bei im Wesentlichen vertikal orientierter Radiallinie L₂, die zweite Befüllöffnung 92 in Umfangsrichtung und auch in radialer Richtung im Bereich dieser zweiten Freigabeaussparung 110 positioniert ist, während gleichzeitig die zweite Ablassöffnung 94 und die zweite Füllstandskontrollöffnung 96 im Bereich der ersten Freigabeaussparung 104, insbesondere im Bereich des Freigabeaussparungsausbuchtungsbereichs 108 derselben positioniert sind. In der zweiten Drehpositionierung der Bodenbearbeitungswalze 22 besteht somit die Möglichkeit der visuellen Wahrnehmungen aller Öffnungen der zweiten Öffnungsgruppe 90 und auch die Möglichkeit, auf die diesen zugeordneten Abschlusselemente einzuwirken, während insbesondere die erste Ablassöffnung 86 und die zweite Ablassöffnung 88 bei dann nicht mehr vertikal orientierter Radiallinie L₁ von dem Abschirmelement 102 überdeckt sind.

Es ist darauf hinzuweisen, dass beispielsweise zwischen dem plattenartigen Trägerelement 52, also dem Abschirmelement 102, und dem ersten Fluidkammergehäuse 44 bzw. dem zweiten Fluidkammergehäuse 46 weitere Bauteile der Bodenbearbeitungswalze 22 bzw. des Bodenverdichters 10 positioniert sein können, welche eine direkte visuelle Wahrnehmung der zweiten Befüllöffnung 92 in der zweiten Drehpositionierung der Bodenbearbeitungswalze 22 durch die zweite Freigabeaussparung 110 hindurch verhindern oder beeinträchtigen können, so dass es erforderlich sein kann, die zweite Befüllöffnung 92 beispielsweise von schräg oben über das Abschirmelement 102 zu betrachten. In diesem Falle könnte auf das Vorsehen der zweiten Freigabeaussparung 110 verzichtet werden oder diese könnte so dimensioniert sein, dass bei Betrachtung von schräg oben die zweite Befüllöffnung 92 durch eine derartige dann radial etwas kürzer dimensionierte zweite Freigabeaussparung 110 hindurch betrachtet bzw. manipuliert werden kann.

## Patentansprüche

1. Bodenbearbeitungswalze, umfassend:
- einen in Richtung einer Walzendrehachse (D) langgestreckten, in einem Bodenbearbeitungsbetrieb um die Walzendrehachse rotierenden Walzenmantel (24),
- eine erste Fluidkammer (40) in einem von dem Walzenmantel (24) umgrenzten Walzeninnenraum (26), wobei in Zuordnung zur ersten Fluidkammer (40) in einem axialen Endbereich (72) des Walzeninnenraums (26) eine erste Öffnungsgruppe (82) mit einer ersten Befüllöffnung (84), einer ersten Ablassöffnung (86) und einer ersten Füllstandskontrollöffnung (88) vorgesehen ist,
- ein in dem axialen Endbereich (72) des Walzeninnenraums (26) angeordnetes, in einem Bodenbearbeitungsbetrieb nicht um die Walzendrehachse (D) rotierendes Abschirmelement (102), wobei in dem Abschirmelement (102) eine erste Freigabeaussparung (104) vorgesehen ist,
**gekennzeichnet durch** eine von der ersten Fluidkammer (40) gegen Fluidaustausch im Wesentlichen getrennte zweite Fluidkammer (42) in dem von dem Walzenmantel (24) umgrenzten Walzeninnenraum (26), wobei in Zuordnung zur zweiten Fluidkammer (42) in dem axialen Endbereich (72) des Walzeninnenraums (26) eine zweite Öffnungsgruppe (90) mit einer zweiten Befüllöffnung (92), einer zweiten Ablassöffnung (94) und einer zweiten Füllstandskontrollöffnung (96) vorgesehen ist,
und **dadurch, dass**:
- in einer ersten Drehpositionierung der Bodenbearbeitungswalze (22) um die Walzendrehachse (D) die erste Ablassöffnung (86) und die erste Füllstandskontrollöffnung (88) in Umfangsrichtung im Bereich der ersten Freigabeaussparung (104) positioniert sind und die zweite Ablassöffnung (94) und die zweite Füllstandskontrollöffnung (96) von dem Abschirmelement (102) überdeckt sind,
- in einer zweiten Drehpositionierung der Bodenbearbeitungswalze (22) um die Walzendrehachse (D) die zweite Ablassöffnung (94) und die zweite Füllstandskontrollöffnung (96) in Umfangsrichtung im Bereich der ersten Freigabeaussparung (104) positioniert sind und die erste Ablassöffnung (86) und die erste Füllstandskontrollöffnung (88) von dem Abschirmelement (102) überdeckt sind.

2. Bodenbearbeitungswalze nach Anspruch 1,
**dadurch gekennzeichnet, dass** die erste Ablassöffnung (86) und die erste Füllstandskontrollöffnung (88) in einem im Bodenbearbeitungsbetrieb um die Walzendrehachse (D) rotierenden Gehäusebereich (89) eines die erste Fluidkammer (40) begrenzenden ersten Fluidkammergehäuses (44) vorgesehen sind, und dass die zweite Ablassöffnung (94) und die zweite Füllstandskontrollöffnung (96) in einem im Bodenbearbeitungsbetrieb um die Walzendrehachse (D) rotierenden Gehäusebereich (98) eines die zweite Fluidkammer (42) begrenzenden zweiten Fluidkammergehäuses (46) vorgesehen sind.

3. Bodenbearbeitungswalze nach Anspruch 1 oder 2,
**dadurch gekennzeichnet, dass** die erste Befüllöffnung (84) unabhängig von der Drehpositionierung der Bodenbearbeitungswalze (22) im Bereich der ersten Freigabeaussparung (104) positioniert ist.

4. Bodenbearbeitungswalze nach Anspruch 3,
**dadurch gekennzeichnet, dass** die erste Befüllöffnung (84) in einem im Bodenbearbeitungsbetrieb nicht um die Walzendrehachse (D) rotierenden Gehäusebereich (50) des ersten Fluidkammergehäuses (44) vorgesehen ist.

5. Bodenbearbeitungswalze nach Anspruch 3 oder 4,
**dadurch gekennzeichnet, dass** die erste Freigabeaussparung (104) einen zentralen Freigabeaussparungsbereich (106) aufweist, wobei die Walzendrehachse (D) sich durch den zentralen Freigabeaussparungsbereich (106) hindurch erstreckt und die erste Befüllöffnung (84) in radialer Richtung und in Umfangsrichtung im Bereich des zentralen Freigabeaussparungsbereichs (106) positioniert ist, und dass die Freigabeaussparung (104) einen von dem zentralen Freigabeaussparungsbereich (106) nach radial außen sich erstreckenden Freigabeaussparungsausbuchtungsbereich (108) aufweist, wobei die erste Ablassöffnung (86), die erste Füllstandskontrollöffnung (88), die zweite Ablassöffnung (94) und die zweite Füllstandskontrollöffnung (96) radial im Bereich des Freigabeaussparungsausbuchtungsbereichs (108) positioniert sind.

6. Bodenbearbeitungswalze nach Anspruch 5,
**dadurch gekennzeichnet, dass** der zentrale Freigabeaussparungsbereich (106) kreisscheibenförmig ausgebildet ist, oder/und dass der Freigabeaussparungsausbuchtungsbereich (108) vertikal im Wesentlichen unter der Walzendrehachse (D) positioniert ist.

7. Bodenbearbeitungswalze nach einem der Ansprüche 1-6,
**dadurch gekennzeichnet, dass** das Abschirmelement (102) ein plattenartiges Walzenträgerelement (52) zur Festlegung der Bodenbearbeitungswalze (22) an einem Maschinenrahmen einer Bodenbearbeitungsmaschine (10) ist.

8. Bodenbearbeitungswalze nach Anspruch 4 und Anspruch 7,
**dadurch gekennzeichnet, dass** der im Bodenbearbeitungsbetrieb nicht um die Walzendrehachse (D) rotierende Gehäusebereich (50) des ersten Fluidkammergehäuses (44) bezüglich des Abschirmelements (102) festgelegt ist.

9. Bodenbearbeitungswalze nach einem der Ansprüche 1-8,
**dadurch gekennzeichnet, dass** in der zweiten Fluidkammer (42) wenigstens eine um eine Unwuchtdrehachse (U₁, U₂) drehbare Unwuchtmasse (30, 32) mit zur Unwuchtdrehachse (U1, U₂) exzentrischem Massenschwerpunkt (M₁, M₂) angeordnet ist, und dass in der ersten Fluidkammer (40) wenigstens ein Teil einer Getriebeanordnung (38) zur Übertragung eines Antriebsdrehmoments von einem Unwuchtantriebsmotor (34) auf die wenigstens eine Unwuchtmasse (30, 22) angeordnet ist.

10. Bodenbearbeitungswalze nach Anspruch 7 und Anspruch 9,
**dadurch gekennzeichnet, dass** der Unwuchtantriebsmotor (34) bezüglich des Abschirmelements (102) festgelegt ist.

11. Bodenbearbeitungswalze nach einem der Ansprüche 1-10,
**dadurch gekennzeichnet, dass** in dem Abschirmelement (102) eine zweite Freigabeaussparung (110) vorgesehen ist, wobei in der zweiten Drehpositionierung der Bodenbearbeitungswalze (22) die zweite Befüllöffnung (92) in Umfangsrichtung im Bereich der zweiten Freigabeaussparung (110) positioniert ist.

12. Bodenbearbeitungswalze nach Anspruch 11,
**dadurch gekennzeichnet, dass** die zweite Freigabeaussparung (110) vertikal im Wesentlichen über der Walzendrehachse (D) positioniert ist.

13. Bodenbearbeitungswalze nach Anspruch 11 oder 12,
**dadurch gekennzeichnet, dass** die zweite Befüllöffnung (92) in dem im Bodenbearbeitungsbetrieb um die Walzendrehachse (D) rotierenden Gehäusebereich (98) des zweiten Fluidkammergehäuses (46) vorgesehen ist.

14. Bodenbearbeitungswalze nach einem der Ansprüche 1-13,
**dadurch gekennzeichnet, dass** die erste Ablassöffnung (86) radial außerhalb der ersten Füllstandskontrollöffnung (88) angeordnet ist, oder/und dass die erste Ablassöffnung (86) und die erste Füllstandskontrollöffnung (88) im Wesentlichen auf einer die Walzendrehachse (D) schneidenden Radiallinie (L₁) liegen.

15. Bodenbearbeitungswalze nach einem der Ansprüche 1-14,
**dadurch gekennzeichnet, dass** die zweite Ablassöffnung (94) radial außerhalb der zweiten Füllstandskontrollöffnung (96) angeordnet ist, oder/und dass die zweite Ablassöffnung (94) und die zweite Füllstandskontrollöffnung (96) im Wesentlichen auf einer die Walzendrehachse (D) schneidenden Radiallinie (L₂) liegen.

16. Bodenbearbeitungswalze nach einem der Ansprüche 1-15,
**dadurch gekennzeichnet, dass** die erste Befüllöffnung (84) vertikal im Wesentlichen über der Walzendrehachse (D) positioniert ist, oder/und dass die zweite Befüllöffnung (92), die zweite Ablassöffnung (94) und die zweite Füllstandskontrollöffnung (96) im Wesentlichen auf einer die Walzendrehachse (D) schneidenden Radiallinien (L₂) liegen.

17. Bodenbearbeitungswalze nach einem der Ansprüche 1-16,
**dadurch gekennzeichnet, dass** in Zuordnung zu wenigstens einer Öffnungsgruppe (82) an der Bodenbearbeitungswalze (10) eine die Positionierung der Ablassöffnung (86) und der Füllstandskontrollöffnung (88) dieser Öffnungsgruppe (82) im Bereich der ersten Freigabeaussparung (104) indizierende Positionierungsreferenz (100) vorgesehen ist.

18. Bodenbearbeitungsmaschine, umfassend wenigstens eine Bodenbearbeitungswalze (22) nach einem der vorangehenden Ansprüche.

## Claims

1. A soil processing roller comprising:
- a roller shell (24) elongated in the direction of a roller axis of rotation (D) and rotating about the roller axis of rotation during a soil processing operation,
- a first fluid chamber (40) in a roller interior space (26) delimited by the roller shell (24), wherein, in association with the first fluid chamber (40) in an axial end region (72) of the roller interior space (26), a first opening group (82) comprising a first filling opening (84), a first discharge opening (86) and a first fill level control opening (88) is provided,
- a shielding element (102) disposed in the axial end portion (72) of the roller interior space (26) and not rotating about the roller axis of rotation (D) during a soil processing operation, wherein a first release recess (104) is provided in the shielding element (102),
**characterized by** a second fluid chamber (42), substantially separated from the first fluid chamber (40) against fluid exchange, in the roller interior space (26) delimited by the roller shell (24), wherein, in association with the second fluid chamber (42) in the axial end region (72) of the roller interior space (26), a second opening group (90) comprising a second filling opening (92), a second discharge opening (94) and a second fill level control opening (96) is provided,
and in that:
- in a first rotational positioning of the soil processing roller (22) about the roller axis of rotation (D), the first discharge opening (86) and the first fill level control opening (88) are positioned in the circumferential direction in the region of the first release recess (104), and the second discharge opening (94) and the second fill level control opening (96) are covered by the shielding element (102),
- in a second rotational positioning of the soil processing roller (22) about the roller axis of rotation (D), the second discharge opening (94) and the second fill level control opening (96) are positioned in the circumferential direction in the region of the first release recess (104) and the first discharge opening (86) and the first fill level control opening (88) are covered by the shielding element (102).

2. The soil processing roller according to claim 1,
**characterized in that** the first discharge opening (86) and the first fill level control opening (88) are provided in a housing region (89) of a first fluid chamber housing (44) delimiting the first fluid chamber (40), said housing region rotating about the roller axis of rotation (D) during soil processing operation, and **in that** the second discharge opening (94) and the second fill level control opening (96) are provided in a housing region (98) of a second fluid chamber housing (46) delimiting the second fluid chamber (42), said housing region rotating about the roller axis of rotation (D) during soil processing operation.

3. The soil processing roller according to claim 1 or 2,
**characterized in that** the first filling opening (84) is positioned in the region of the first release recess (104) independently of the rotational positioning of the soil processing roller (22).

4. The soil processing roller according to claim 3,
**characterized in that** the first filling opening (84) is provided in a housing region (50) of the first fluid chamber housing (44) that does not rotate about the roller axis of rotation (D) during soil processing operation.

5. The soil processing roller according to claim 3 or 4,
**characterized in that** the first release recess (104) comprises a central release recess region (106), wherein the roller axis of rotation (D) extends through the central release recess region (106) and the first filling opening (84) is positioned in radial direction and in circumferential direction in the region of the central release recess region (106), and **in that** the release recess (104) has a release recess bulge region (108) extending radially outwardly from the central release recess region (106), wherein the first discharge opening (86), the first fill level control opening (88), the second discharge opening (94) and the second fill level control opening (96) are positioned radially in the region of the release recess bulge region (108).

6. The soil processing roller according to claim 5,
**characterized in that** the central release recess region (106) is shaped as a circular disk, or/and **in that** the release recess region (108) is positioned vertically substantially below the roller axis of rotation (D).

7. The soil processing roller according to any one of claims 1-6,
**characterized in that** the shielding element (102) is a plate-like roller support element (52) for fixing the soil processing roller (22) to a machine frame of a soil processing machine (10).

8. The soil processing roller according to claim 4 and claim 7,
**characterized in that** the housing portion (50) of the first fluid chamber housing (44), which does not rotate about the axis of rotation (D) of the rollerduring soil processing operation, is fixed with respect to the shielding element (102).

9. The soil processing roller according to any one of claims 1-8,
**characterized in that** at least one unbalanced mass (30, 32) rotatable about an unbalanced axis of rotation (U₁, U₂) is arranged in the second fluid chamber (42) with a center of mass (M₁, M₂) eccentric to the unbalanced axis of rotation (U₁, U₂), and **in that** at least a portion of a gear arrangement (38) for transmitting a drive torque from an unbalanced drive motor (34) to the at least one unbalanced mass (30, 22) is arranged in the first fluid chamber (40).

10. The soil processing roller according to claim 7 and claim 9,
**characterized in that** the unbalanced drive motor (34) is fixed with respect to the shielding element (102).

11. The soil processing roller according to any one of claims 1-10, **characterized in that** a second release recess (110) is provided in the shielding element (102), wherein, in the second rotational positioning of the soil processing roller (22), the second filling opening (92) is positioned in the circumferential direction in the region of the second release recess (110).

12. The soil processing roller according to claim 11,
**characterized in that** the second release recess (110) is positioned vertically substantially above the roller axis of rotation (D).

13. The soil processing roller according to claim 11 or 12,
**characterized in that** the second filling opening (92) is provided in the housing portion (98) of the second fluid chamber housing (46) rotating about the roller axis of rotation (D) during soil processing operation.

14. The soil processing roller according to any one of claims 1-13,
**characterized in that** the first discharge opening (86) is arranged radially outside the first fill level control opening (88), or/and **in that** the first discharge opening (86) and the first fill level control opening (88) lie substantially on a radial line (L₁) intersecting the roller axis of rotation (D).

15. The soil processing roller according to any one of claims 1-14,
**characterized in that** the second discharge opening (94) is arranged radially outside the second fill level control opening (96), or/and **in that** the second discharge opening (94) and the second fill level control opening (96) lie substantially on a radial line (L₂) intersecting the roller axis of rotation (D).

16. The soil processing roller according to any one of claims 1-15,
**characterized in that** the first filling opening (84) is positioned vertically substantially above the roller axis of rotation (D), or/and **in that** the second filling opening (92), the second discharge opening (94) and the second fill level control opening (96) lie substantially on a radial line (L₂) intersecting the roller axis of rotation (D).

17. The soil processing roller according to any one of claims 1-16,
**characterized in that,** in association with at least one opening group (82) on the soil processing roller (10), a positioning reference (100) indicating the positioning of the discharge opening (86) and the fill level control opening (88) of this opening group (82) in the region of the first release recess (104) is provided.

18. A soil processing machine comprising at least one soil processing roller (22) according to any one of the preceding claims.

## Revendications

1. Un rouleau de traitement du sol comprenant
- une coque de rouleau (24) allongée dans la direction d'un axe de rotation du rouleau (D) et tournant autour de l'axe de rotation du rouleau pendant une opération de traitement du sol,
- une première chambre de fluide (40) dans un espace intérieur de rouleau (26) délimité par la coque de rouleau (24), dans lequel, en association avec la première chambre de fluide (40) dans une région d'extrémité axiale (72) de l'espace intérieur de rouleau (26), un premier groupe d'ouverture (82) comprenant une première ouverture de remplissage (84), une première ouverture de décharge (86) et une première ouverture de contrôle de niveau de remplissage (88) est fourni,
- un élément de protection (102) disposé dans la partie d'extrémité axiale (72) de l'espace intérieur de rouleau (26) et ne tournant pas autour de l'axe de rotation du rouleau (D) pendant une opération de traitement du sol, dans lequel une première encoche de libération (104) est prévu dans l'élément de protection (102),
**caractérisé par** une deuxième chambre de fluide (42), sensiblement séparée de la première chambre de fluide (40) contre l'échange de fluide, dans l'espace intérieur de rouleau (26) délimité par la coque de rouleau (24), dans lequel, en association avec la deuxième chambre de fluide (42) dans la région d'extrémité axiale (72) de l'espace intérieur de rouleau (26), un deuxième groupe d'ouverture (90) comprenant une deuxième ouverture de remplissage (92), une deuxième ouverture de décharge (94) et une deuxième ouverture de contrôle de niveau de remplissage (96) est prévu,
et en ce que :
- dans un premier positionnement rotatif du rouleau de traitement du sol (22) autour de l'axe de rotation du rouleau (D), la première ouverture de décharge (86) et la première ouverture de contrôle de niveau de remplissage (88) sont positionnées dans la direction circonférentielle dans la région de la première encoche de libération (104), et la deuxième ouverture de décharge (94) et la deuxième ouverture de contrôle de niveau de remplissage (96) sont couvertes par l'élément de protection (102),
- dans un deuxième positionnement rotatif du rouleau de traitement du sol (22) autour de l'axe de rotation du rouleau (D), la deuxième ouverture de décharge (94) et la deuxième ouverture de contrôle de niveau de remplissage (96) sont positionnées dans la direction circonférentielle dans la région de la première encoche de libération (104) et la première ouverture de décharge (86) et la première ouverture de contrôle de niveau de remplissage (88) sont couvertes par l'élément de protection (102).

2. Le rouleau de traitement du sol selon la revendication 1,
**caractérisé en ce que** la première ouverture de décharge (86) et la première ouverture de contrôle de niveau de remplissage (88) sont prévues dans une région de boîtier (89) d'un boîtier de la première chambre de fluide (44) délimitant la première chambre de fluide (40), ladite région de boîtier tournant autour de l'axe de rotation du rouleau (D) pendant l'opération de traitement du sol, et **en ce que** la deuxième ouverture de décharge (94) et la deuxième ouverture de contrôle de niveau de remplissage (96) sont prévues dans une région de boîtier (98) d'un boîtier de la deuxième chambre de fluide (46) délimitant la deuxième chambre de fluide (42), ladite région de boîtier tournant autour de l'axe de rotation du rouleau (D) pendant l'opération de traitement du sol.

3. Le rouleau de traitement du sol selon la revendication 1 ou 2,
**caractérisé en ce que** la première ouverture de remplissage (84) est positionnée dans la région de la première encoche de libération (104) indépendamment du positionnement en rotation du rouleau de traitement du sol (22).

4. Le rouleau de traitement du sol selon la revendication 3,
**caractérisé en ce que** la première ouverture de remplissage (84) est prévue dans une région de boîtier (50) du boîtier de la première chambre de fluide (44) qui ne tourne pas autour de l'axe de rotation du rouleau (D) pendant l'opération de traitement du sol.

5. Le rouleau de traitement du sol selon la revendication 3 ou 4,
**caractérisé en ce que** la première encoche de libération (104) comprend une région centrale d'encoche de libération (106), dans laquelle l'axe de rotation du rouleau (D) s'étend à travers la région centrale d'encoche de libération (106) et la première ouverture de remplissage (84) est positionnée dans la direction radiale et dans la direction circonférentielle dans la région de la région centrale d'encoche de libération (106), et **en ce que** l'encoche de libération (104) a une région de renflement d'encoche de libération (108) s'étendant radialement vers l'extérieur à partir de la région centrale d'encoche de libération (106), dans lequel la première ouverture de décharge (86), la première ouverture de contrôle de niveau de remplissage (88), la deuxième ouverture de décharge (94) et la deuxième ouverture de contrôle de niveau de remplissage (96) sont positionnées radialement dans la région de renflement d'encoche de libération (108).

6. Le rouleau de traitement du sol selon la revendication 5,
**caractérisé en ce que** la région centrale d'encoche de libération (106) a la forme d'un disque circulaire, ou/et **en ce que** la région de renflement d'encoche de libération (108) est positionnée verticalement sensiblement au-dessous de l'axe de rotation du rouleau (D).

7. Le rouleau de traitement du sol selon l'une des revendications 1 à 6,
**caractérisé en ce que** l'élément de protection (102) est un élément de support de rouleau en forme de plaque (52) pour fixer le rouleau de traitement du sol (22) au châssis d'une machine de traitement du sol (10).

8. Le rouleau de traitement du sol selon les revendications 4 et 7,
**caractérisé en ce que** la partie (50) du boîtier de la première chambre de fluide (44), qui ne tourne pas autour de l'axe de rotation du rouleau (D) pendant l'opération de traitement du sol, est fixée par rapport à l'élément de protection (102).

9. Le rouleau de traitement du sol selon l'une des revendications 1 à 8,
**caractérisé en ce qu'**au moins une masse à balourd (30, 32) pouvant tourner autour d'un axe de rotation à balourd (U₁, U₂) est disposée dans la deuxième chambre de fluide (42) avec un centre de masse (M₁, M₂) excentré par rapport à l'axe de rotation à balourd (U₁, U₂), et **en ce qu'**au moins une partie d'un dispositif d'engrenage (38) pour transmettre un couple d'entraînement d'un moteur d'entraînement à balourd (34) à ladite au moins une masse à balourd (30, 22) est disposée dans la première chambre de fluide (40).

10. Le rouleau de traitement du sol selon les revendications 7 et 9,
**caractérisé en ce que** le moteur d'entraînement à balourd (34) est fixé par rapport à l'élément de protection (102).

11. Le rouleau de traitement du sol selon l'une des revendications 1 à 10,
**caractérisé en ce qu'**une deuxième encoche de libération (110) est prévue dans l'élément de protection (102), dans lequel, dans la deuxième position de rotation du rouleau de traitement du sol (22), la deuxième ouverture de remplissage (92) est positionnée dans la direction circonférentielle dans la région de la deuxième encoche de libération (110).

12. Le rouleau de traitement du sol selon la revendication 11,
**caractérisé en ce que** la deuxième encoche de libération (110) est positionnée verticalement sensiblement au-dessus de l'axe de rotation du rouleau (D).

13. Le rouleau de traitement du sol selon la revendication 11 ou 12,
**caractérisé en ce que** la deuxième ouverture de remplissage (92) est prévue dans la partie (98) du boîtier de la deuxième chambre de fluide (46) tournant autour de l'axe de rotation du rouleau (D) pendant l'opération de traitement du sol.

14. Le rouleau de traitement du sol selon l'une des revendications 1 à 13,
**caractérisé en ce que** la première ouverture de décharge (86) est disposée radialement à l'extérieur de la première ouverture de contrôle de niveau de remplissage (88), ou/et **en ce que** la première ouverture de décharge (86) et la première ouverture de contrôle de niveau de remplissage (88) se trouvent sensiblement sur une ligne radiale (L₁) coupant l'axe de rotation du rouleau (D).

15. Le rouleau de traitement du sol selon l'une des revendications 1 à 14,
**caractérisé en ce que** la deuxième ouverture de décharge (94) est disposée radialement à l'extérieur de la deuxième ouverture de contrôle de niveau de remplissage (96), ou/et **en ce que** la deuxième ouverture de décharge (94) et la deuxième ouverture de contrôle de niveau de remplissage (96) se situent sensiblement sur une ligne radiale (L₂) coupant l'axe de rotation du rouleau (D).

16. Le rouleau de traitement du sol selon l'une des revendications 1 à 15,
**caractérisé en ce que** la première ouverture de remplissage (84) est positionnée verticalement sensiblement au-dessus de l'axe de rotation du rouleau (D), ou/et **en ce que** la deuxième ouverture de remplissage (92), la deuxième ouverture de décharge (94) et la deuxième ouverture de contrôle de niveau de remplissage (96) se situent sensiblement sur une ligne radiale (L₂) coupant l'axe de rotation du rouleau (D).

17. Le rouleau de traitement du sol selon l'une des revendications 1 à 16,
**caractérisé en ce que,** en association avec au moins un groupe d'ouvertures (82) sur le rouleau de traitement du sol (10), une référence de positionnement (100) indiquant le positionnement de l'ouverture de décharge (86) et de l'ouverture de contrôle de niveau de remplissage (88) de ce groupe d'ouvertures (82) dans la région de la première encoche de libération (104) est fournie.

18. Une machine de traitement du sol comprenant au moins un rouleau de traitement du sol (22) selon l'une quelconque des revendications précédentes.
